# EUROPÄISCHE PATENTSCHRIFT

(11) **EP 3 175 130 B1**
(45) Veröffentlichungstag und Bekanntmachung des Hinweises auf die Patenterteilung: **15.08.2018**
(21) Anmeldenummer: 15736398.7
(22) Anmeldetag: 09.07.2015
(51) Int. Cl.: F16B 13/06

(54) **SPREIZDÜBEL**
SPREADING DOWEL
CHEVILLE À EXPANSION

(30) Priorität: 29.07.2014 DE 102014110726
(43) Veröffentlichungstag der Anmeldung: 07.06.2017
(73) Patentinhaber: fischerwerke GmbH & Co. KG, 72178 Waldachtal (DE)
(72) Erfinder: NEHL, Wolfgang, 72178 Waldachtal (DE)
(86) Internationale Anmeldenummer: PCT/EP2015/001404
(87) Internationale Veröffentlichungsnummer: WO 2016/015821

(56) Entgegenhaltungen:
- DE-A1- 3 346 793
- DE-A1-102011 000 537

## Beschreibung

Die Erfindung betrifft einen Spreizdübel mit den Merkmalen des Oberbegriffs des Anspruchs 1.

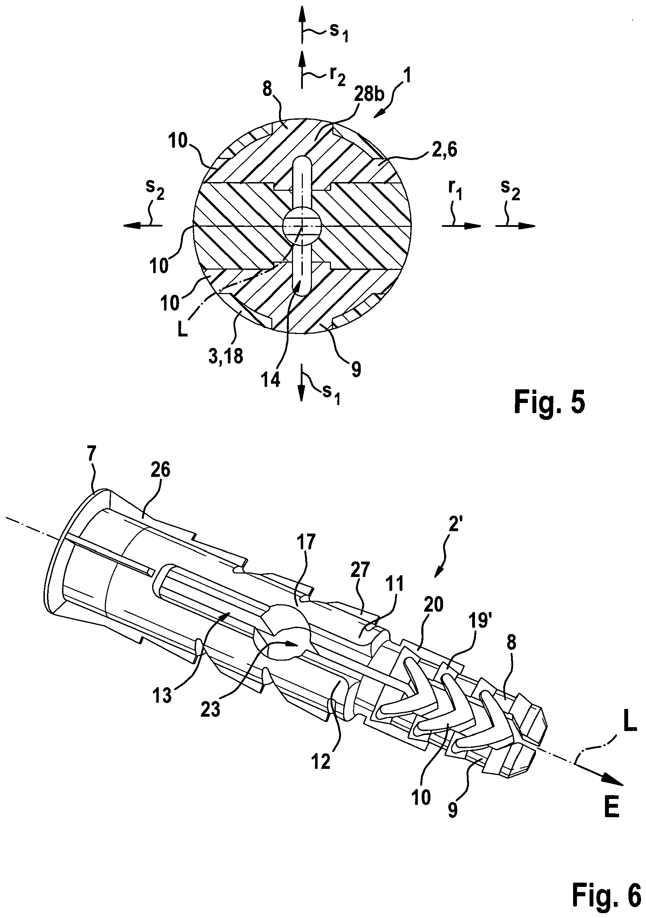

Aus den Figuren 5 bis 8 der Offenlegungsschrift DE 10 2011 000 537 A1 ist ein gattungsgemäßer Spreizdübel bekannt, der aus mehreren unterschiedlichen Kunststoffen besteht und in einem Mehrkomponentenspritzgussverfahren hergestellt wird. Der Spreizdübel dient zur Befestigung von Gegenständen an einem Verankerungsgrund und kann hierzu in ein in dem Verankerungsgrund hergestelltes Bohrloch eingeführt und mit einem Spreizelement verspreizt werden. Der Spreizdübel weist den in Figur 6 der Offenlegungsschrift dargestellten innenliegenden Grundkörper aus einem ersten Kunststoff auf. Der Grundkörper erstreckt sich in Längsrichtung entlang einer Längsachse und besteht aus einer rohrartigen Einführhülse, durch die eine Schraube als Spreizelement in einen innenliegenden und sich in Längsrichtung erstreckenden Spreizkanal eingeführt werden kann. Zudem umfasst der Grundkörper einen sich an die Einführhülse anschließenden Spreizbereich, der mehrere durch Schlitze voneinander getrennte Spreizzungen aufweist, die aus dem ersten Kunststoff hergestellt sind und eine sich in Einbringrichtung an den Spreizbereich anschließende Hülse, die aus zwei Hülsenteilen besteht, die durch V-förmige, elastische und in Umfangsrichtung aufweitbare Verbinder verbunden sind. Der Grundkörper ist mit einer Hülle aus einem zweiten Kunststoff zumindest teilweise umhüllt, die sich beim Aufspreizen des Spreizdübels zumindest teilweise im Spreizbereich vom Grundkörper löst. Beim Einbringen des Spreizelements wird die Hülse in radialer Richtung gedehnt, wobei sich die beiden Hülsenteile voneinander weg bewegen und die Verbinder sich in Umfangsrichtung strecken. Die Verbinder werden dabei im Wesentlichen nicht radial nach außen bewegt, ebenso wenig die zwischen den Verbindern befindlichen Verbindungsstege der Hülle, weshalb die Hülle ausreichend fest mit der Hülse des Grundkörpers verbunden ist.

Aufgabe der Erfindung ist, einen verbesserten Spreizdübel vorzuschlagen, der ein verbessertes Spreizverhalten aufweist.

Diese Aufgabe wird erfindungsgemäß durch einen Spreizdübel mit den Merkmalen des Anspruchs 1 gelöst. Der erfindungsgemäße Spreizdübel, der aus mindestens zwei unterschiedlichen Kunststoffen besteht, umfasst einen Grundkörper aus einem ersten Kunststoff und eine Hülle aus einem zweiten Kunststoff, die den Grundkörper zumindest teilweise umhüllt. Mit "unterschiedlichen Kunststoffen" sind Kunststoffe gemeint, die sich beispielsweise hinsichtlich ihrer Festigkeit, ihres Elastizitätsmoduls, ihrer chemischen Zusammensetzung, ihres Faseranteils und/oder ihrer Farbe voneinander unterscheiden. Der Grundkörper weist einen Spreizbereich mit mindestens zwei durch einen ersten Schlitz voneinander getrennten Spreizzungen auf, der sich in Längsrichtung entlang einer Längsachse erstreckt. Die Länge des ersten Schlitzes definiert somit die Länge des Spreizbereichs. Die Spreizzungen sind durch das Einbringen eines Spreizelements, insbesondere einer Schraube, in radialer Richtung voneinander weg bewegbar und der Spreizbereich somit aufspreizbar. Insbesondere sind die beiden Spreizzungen durch den ersten Schlitz vollständig voneinander getrennt, sie können aber auch durch eine dünne Spritzhaut oder durch elastische Elemente, die aus dem ersten Kunststoff bestehen, miteinander verbunden sein, die aber ein Aufspreizen des Spreizbereichs im Wesentlichen nicht behindern, sondern zur Führung des Spreizelements dienen. Zudem weist der Grundkörper eine in Einbringrichtung vor dem Spreizbereich angeordnete Hülse auf. Die "Einbringrichtung" ist die Richtung, in der der Spreizdübel planmäßig in ein Bohrloch eingebracht wird. Die Hülse bildet ein Widerlager für das Spreizelement und kann beispielsweise beim Eindrehen einer Schraube zu einer in Einbringrichtung hinter dem Spreizbereich angeordneten Einführhülse bewegt werden, wodurch der Spreizbereich verkürzt und aufgespreizt wird. Die Hülse besteht aus mindestens zwei Hülsenteilen, die durch mindestens einen elastischen Verbinder derart miteinander verbunden sind, dass die Hülse zum Einführen von Spreizelementen unterschiedlicher Durchmesser in radialer Richtung aufweitbar ist. Der mindestens eine elastische Verbinder lässt ein Aufweiten der Hülse nur bis zu einem bestimmten Maß zu, so dass auch eine als Spreizelement verwendete Schraube mit kleinem Durchmesser ausreichend Halt findet, um ein Stauchen des Stauchbereichs in einem Hohlbaustoff durch Verkürzen des Spreizdübels zu ermöglichen. Der Verbinder ist insbesondere V-förmig und in Umfangsrichtung streckbar gestaltet. Die Hülle bildet um die Hülse einen Hüllkörper aus dem zweiten Kunststoff, der die Hülse zumindest teilweise umhüllt.

Erfindungsgemäß ist an mindestens einem der Hülsenteile mindestens eine sich in Umfangsrichtung erstreckende und radial nach außen stehende Rippe angeordnet, die vom Hüllkörper umgeben ist. "Umgeben" meint hier insbesondere, dass die Rippe in Einbringrichtung vorn und hinten vom Hüllkörper umgeben ist, insbesondere derart, dass der zweite Kunststoff direkt und vollflächig an der Rippe anliegt. Zudem kann die Rippe auch in Umfangsrichtung und/oder in radialer Richtung vom zweiten Kunststoff umgeben sein, insbesondere derart, dass sie durch den Hüllkörper in Längsrichtung, in Umfangsrichtung und radial von außen vollständig umschlossen und somit für einen Verarbeiter nicht sichtbar ist. Die Rippe gibt dem Hüllkörper Halt und hält ihn axialfest an der Hülse, derart, dass der Hüllkörper im Bereich der Rippe in axialer Richtung nicht gegenüber der Hülse verschoben werden kann, auch dann nicht, wenn der Verbinder beim Aufspreizen radial und relativ zur Hülle bewegt wird. Insbesondere auch dann, wenn die Hülse quer zum ersten Schlitz aufgespreizt wird, hält die Rippe den Hüllkörper ortsfest zur Hülse und verhindert, dass sich der Hüllkörper von der Hülse löst. Die Rippe ist insbesondere in sich formstabil, d.h. beim Spreizen der Hülse wird die Rippe im Gegensatz zum Verbinder im Wesentlichen nicht verformt, insbesondere nicht in Umfangs- und/oder Längsrichtung gedehnt.

Bei einer bevorzugten Ausgestaltungsform des erfindungsgemäßen Spreizdübels sind an dem mindestens einen Hülsenteil mindestens drei in Richtung der Längsachse voneinander beabstandete Rippen angeordnet, die insbesondere alle vom zweiten Kunststoff des Hüllkörpers umgeben sind. Insbesondere ist der zweite Kunststoff vollflächig zwischen den Rippen angeordnet. Dies führt zu einem weiter verbesserten Halt des Hüllkörpers an der Hülse. Vorzugsweise entspricht bei dieser Ausgestaltungsform die axiale Erstreckung jeweils einer der Rippen im Wesentlichen dem axialen Abstand, also dem Abstand in Längsrichtung, von zwei benachbarten Rippen. Diese Ausgestaltungsform weist eine sehr gute Verbindung von Hüllkörper und Hülse auf.

Weiterhin ist bevorzugt, dass beide Hülsenteile mindestens eine Rippe aufweisen, wodurch der Halt des Hüllkörpers auf der Hülse weiter verbessert wird.

In einer weiteren bevorzugten Ausgestaltungsform des erfindungsgemäßen Spreizdübels ist mindestens eine Rippe abgeschrägt. Insbesondere ist die in radialer Richtung äußere Fläche der Rippe keilförmig geneigt, insbesondere derart, dass die Rippe entgegen der Einbringrichtung nach hinten und radial nach außen keilförmig ansteigt. Dies hat den Vorteil, dass der Hüllkörper auf der Hülse entgegen der Einbringrichtung bewegbar ist und durch die Bewegung auf der Rippe zusätzlich aufgeweitet und gespreizt wird, was den Halt des Spreizdübels in einem Vollbaustoff verbessert. Beim Einbringen des Spreizdübels in ein Bohrloch ist der Hüllkörper aber weiterhin axialfest auf der Hülse gehalten.

Vorzugsweise ist in der Hülse ein zweiter, insbesondere in Längsrichtung des Spreizdübels verlaufender Schlitz angeordnet. Der zweite Schlitz ist gegenüber dem ersten Schlitz geneigt. Das bedeutet, dass eine Ebene, in der der erste Schlitz liegt, eine Ebene, in der der zweite Schlitz liegt, unter einem Winkel schneidet. Insbesondere sind die beiden Schlitze, bzw. die beiden Ebenen, in denen die Schlitze liegen, orthogonal zueinander.

Vorzugsweise weitet sich der Spreizbereich eines erfindungsgemäßen Spreizdübels, beim Einbringen eines Spreizelements im Wesentlichen in eine erste radiale Spreizrichtung, während die Hülse in eine davon abweichende zweite radiale Spreizrichtung aufspreizt. Mit "im Wesentlichen" ist hier gemeint, dass sich der Spreizbereich bzw. die Hülse beim Einbringen des Spreizelements in eine bevorzugte Spreizrichtung stärker weitet als in andere Richtungen. Dies schließt aber nicht aus, dass sich der Spreizbereich und/oder die Hülse auch in andere Richtungen oder insgesamt im Umfang aufweitet.

Vorzugsweise sind die beiden radialen Spreizrichtungen des Spreizbereichs und der Hülse insbesondere im Wesentlichen orthogonal zueinander, wobei "im Wesentlichen" hier bedeutet, dass eine Abweichung von +/-10° möglich ist.

Ein Spreizdübel mit Bereichen unterschiedlicher Spreizrichtungen hat den Vorteil, dass der Dübel nicht nur eine bevorzugte Spreizrichtung aufweist, sondern mindestens zwei Spreizrichtungen. Die beim Aufspreizen des Spreizbereichs und der Hülse entstehende Spreizkräfte werden somit in unterschiedliche Richtungen in den Verankerungsgrund eingeleitet und verteilt, wodurch größere Kräfte vom Spreizdübel in den Verankerungsgrund eingeleitet werden können.

Die Erfindung wird nachfolgend anhand von zwei Ausführungsbeispielen näher erläutert.

Es zeigen:
- Figur 1: einen ersten erfindungsgemäßen Spreizdübel in einer Seitenansicht;
- Figur 2: den Grundkörper des ersten Spreizdübels in einer perspektivischen Seitenansicht;
- Figur 3: einen Axialschnitt entlang der Achse III-III durch den ersten Spreizdübel;
- Figur 4: einen Schnitt durch den ersten Spreizdübel entlang der Achse IV-IV;
- Figur 5: einen Schnitt durch den ersten Spreizdübel entlang der Achse V-V; und
- Figur 6: den Grundkörper eines zweiten erfindungsgemäßen Spreizdübels in einer perspektivischen Seitenansicht.

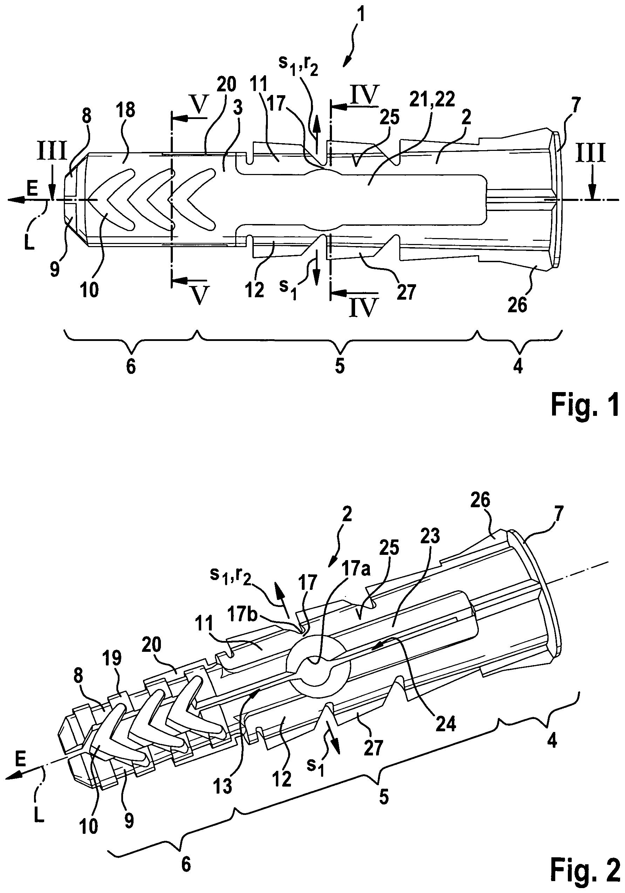

In den Figuren 1 bis 5 ist ein erster erfindungsgemäßer Spreizdübel 1 dargestellt, der zur Befestigung eines Gegenstands (nicht dargestellt) in ein Bohrloch (nicht dargestellt) eingebracht und mit einem Spreizelement, insbesondere einer Schraube (nicht dargestellt), verspreizt werden kann. Der Spreizdübel 1 besteht aus einem Grundkörper 2 aus einem ersten Kunststoff und einer Hülle 3 aus einem zweiten, sich vom ersten Kunststoff unterscheidenden Kunststoff. Der erste Kunststoff ist im Ausführungsbeispiel ein Polyamid, während der zweite Kunststoff ein Polypropylen ist. Der Grundkörper 2 ist ohne die Hülle 3 in Figur 2 dargestellt und besteht aus einer Einführhülse 4, die in Einbringrichtung E hinten am Grundkörper 2 angeordnet ist, einem sich an die Einführhülse 4 in Einbringrichtung E anschließenden Spreizbereich 5 und eine am Grundkörper 2 vorn angeordnete Hülse 6. Die Einbringrichtung E ist die Richtung, in die der Spreizdübel 1 planmäßig in ein Bohrloch eingebracht wird. Die Einführhülse 4, durch die ein Spreizelement in den Spreizdübel 1 planmäßig eingeführt werden kann, ist im Ausführungsbeispiel als kurzer Hohlzylinder ausgebildet, der sich entlang der Längsachse L erstreckt und an dessen Außenseite vier hintere Verdrehsicherungsrippen 26 angeordnet sind. Am hinteren Ende der Einführhülse 4 ist ein umlaufendender Bund 7 angeordnet, der das hintere Ende des Grundkörpers 2 und des Spreizdübels 1 bildet und verhindert, dass der Spreizdübel 1 zu tief in ein Bohrloch eingebracht werden kann. Die vorn am Grundkörper 2 angeordnete Hülse 6 besteht aus zwei halbschalenförmigen Hülsenteilen 8, 9 die durch drei V-förmige elastische Verbinder 10 miteinander verbunden sind, so dass die Hülse 6 beim Einbringen eines Spreizelements in radialer Richtung aufweitbar ist, wobei sich die Verbinder 10 in radialer Richtung dehnen. Zwischen der Hülse 6 und der Einführhülse 4 erstreckt sich der Spreizbereich 5 entlang der Längsachse L.

Der Spreizbereich 5 weist zwei Spreizzungen 11, 12 auf, die durch einen ersten Schlitz 13 gebildet werden, der sich in Längsrichtung des Spreizdübels 1 und in eine erste radiale Richtung r₁ erstreckt und den Grundkörper 2 im Spreizbereich 5 vollständig durchdringt. In den Figuren 1 und 2 verläuft die erste radiale Richtung r₁ senkrecht zur Bildebene. Die axiale Länge des ersten Schlitzes 13 definiert die axiale Länge der Spreizzungen 11, 12 und somit die Länge des Spreizbereichs 5. Dadurch, dass die beiden Spreizzungen 11, 12 durch den ersten Schlitz 13 vollständig voneinander getrennt sind, können die Spreizzungen 11, 12 beim Einbringen eines Spreizelements voneinander weg bewegt und in eine erste Spreizrichtung s₁ aufgespreizt werden. Die erste Spreizrichtung s₁ ist orthogonal zu einer Ebene, in der der erste Schlitz 13 liegt. Damit die Spreizzungen 11, 12 schon durch eine kleine, beim Einführen eines Spreizelements in den Spreizbereich 5 entstehende und in die erste Spreizrichtung s₁ wirkende Spreizkraft aufgespreizt werden können, weisen die Spreizzungen 11, 12 lokale Schwächungen 17 auf, die als Sollknickstellen wirken. Die Schwächungen 17 sind im Spreizbereich 5 ungefähr in Längsrichtung mittig an den Spreizzungen 11, 12 zwischen der Hülse 6 und der Einführhülse 4 angeordnet und bestehen jeweils aus zwei Teilen: Jeweils einem in radialer Richtung innen an den Spreizzungen 11, 12 angeordneten inneren Teil 17a, der als konisch abgeschrägte, kreissegmentförmige Höhlung ausgeführt ist, und jeweils einem in radialer Richtung außen an den Spreizzungen 11, 12 angeordneten äußeren Teil 17b, der schlitz- bzw. keilförmig ausgestaltet ist. Beim Aufspreizen knicken die beiden Spreizzungen 11, 12 an den Schwächungen 17 aus und werden in die erste Spreizrichtung s₁ voneinander weg und orthogonal zur ersten radialen Richtung r₁ bzw. zu einer Ebene bewegt, in der der erste Schlitz 13 liegt.

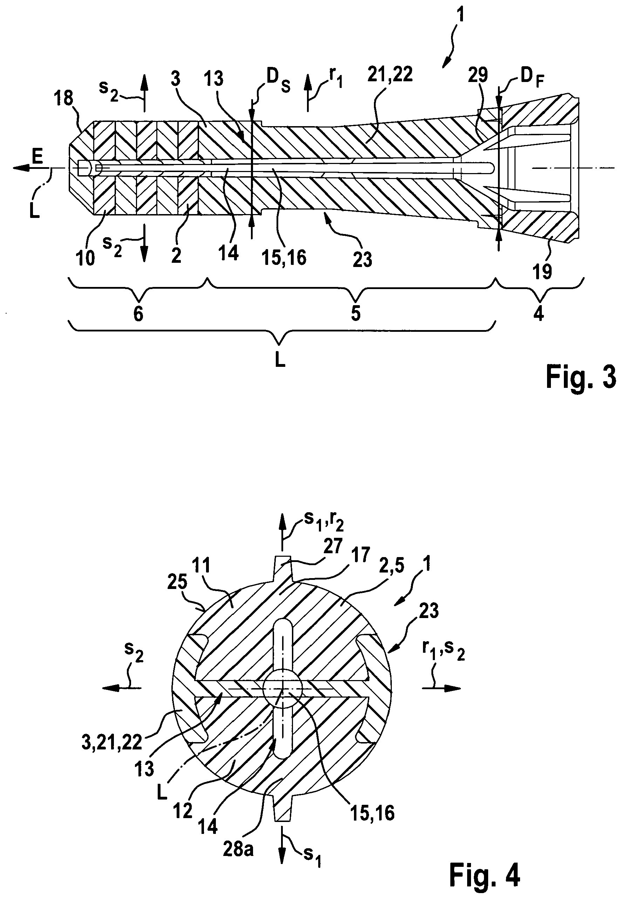

Wie in den Figuren 3 und 4 dargestellt, bildet der erste Schlitz 13 mit einem zweiten Schlitz 14 im Spreizbereich 5 einen Spreizkanal 15 zur Aufnahme eines Spreizelements (nicht dargestellt). Der zweite Schlitz 14 erstreckt sich in Längsrichtung des Spreizdübels 1 und in eine zweite radiale Richtung r₂, die orthogonal zur ersten radialen Richtung r₁ und parallel zur ersten Spreizrichtung s₁ ist. Der Spreizkanal 15 ist aufgrund der beiden sich kreuzenden und zueinander geneigten Schlitze 13, 14 kreuzförmig und weist in dem Bereich, in dem sich die beiden Schlitze 13, 14 schneiden, einen zentrischen Schraubkanal 16 mit Kreisquerschnitt auf. Der Schraubkanal 16 dient zur Führung einer als Spreizelement in den Spreizkanal 15 eingeschraubten Schraube (nicht dargestellt) und erstreckt sich bis in die Hülse 6. Der zweite Schlitz 14 erstreckt sich in die zweite radiale Richtung r₂ nur soweit, dass er den Grundkörper 2 im Spreizbereich 5 nicht durchdringt. Der zweite Schlitz 14 schwächt die Spreizzungen 11, 12 lokal, so dass an den Spreizzungen 11, 12 eine Art Scharnier 28a ausgebildet ist, das parallel zur Längsachse L verläuft und bewirkt, dass sich die Spreizzungen 11, 12, die einen nahezu halbkreisförmigen Querschnitt aufweisen, sich an eine unebene Bohrlochwand (nicht dargestellt) anpassen können.

Während der erste Schlitz 13 ausschließlich im Spreizbereich 5 angeordnet ist und sich nicht bis in die Hülse 6 erstreckt, und somit die Länge des Spreizbereichs 5 definiert, erstreckt sich der zweite Schlitz 14 bis in die Hülse 6 und verläuft, wie der Schraubkanal 16, nahezu bis zum vorderen Ende des Spreizdübels 1, wie dies in Figur 3 zu sehen ist. Der zweite Schlitz 14 durchdringt auch die beiden Hülsenteile 8, 9 in radialer Richtung nicht, wodurch auch in den beiden Hülsenteile 8, 9 Scharniere 28b entstehen, derart, dass auch die beiden Hülsenteile 8, 9 entlang einer parallel zur Längsachse L verlaufenden Achse in sich verformt werden können. Zudem durchtrennt der zweite Schlitz 14 die Hülse 6 im Inneren der Hülse 6, wodurch der zweite Schlitz 14 eine orthogonal zum Schlitz 14 verlaufende zweite Spreizrichtung s₂ definiert, in die die Hülse 6 beim Einbringen eines Spreizelements im Wesentlichen aufgespreizt wird. Die Hülse 6 wird sich aufgrund der elastischen Verbinder 10 zwar auch in die zweite radiale Richtung r₂ weiten, allerdings nicht in dem Maß, wie dies aufgrund des zweiten Schlitzes 14 in die zweiten Spreizrichtungen s₂ möglich ist. Da die Schlitze 13, 14 orthogonal zueinander stehen, spreizt der Spreizbereich 5 beim Einbringen eines Spreizelements im Wesentlichen in die erste radiale Spreizrichtung s₁ auf, während die Hülse 6 im Wesentlichen in die davon abweichende zweite radiale Spreizrichtung s₂ aufspreizt, die orthogonal zur ersten Spreizrichtung s₁ ist.

Die Hülse 6 ist durch einen Hüllkörper 18 der Hülle 3 teilweise umhüllt. Um zu verhindern, dass die Hülle 3 beim Aufspreizen des Spreizdübels 1 relativ zur Hülse 6 verschoben wird, sind außen an der Hülse 6 des Grundkörpers 2 Rippen 19 und längliche Blöcke 20 angeordnet. Jeweils vier Rippen 19 sind an jedem der beiden Hülsenteile 8, 9 als in Umfangsrichtung verlaufende, in Längsrichtung voneinander beabstandete und radial nach außen stehende Teile eines Kreisrings ausgebildet, die vom Hüllkörper 18 umgeben und umschlossen sind, derart, dass die Rippen 19 den Hüllkörper 18 axialfest an der Hülse 6 halten. Die Abstände zwischen benachbarten Rippen 19 entsprechen dabei der axialen Erstreckung der Rippen 19. Die beiden Blöcke 20 sind quaderförmig ausgebildet und verlaufen in Längsrichtung des Spreizdübels 1. Je ein Block 20 ist am hinteren Teil der Hülse 6 angeordnet, wobei sich die Blöcke 20 bis in den Spreizbereich 5 erstrecken. Die Blöcke 20 sind in Umfangsrichtung und in Längsrichtung von der Hülle 3 umgeben, die sie in radialer Richtung durchdringen. Die Blöcke 20 verhindern eine Bewegung des Hüllkörpers 18 auf der Hülse 6 in Umfangsrichtung.

In Figur 6 ist ein alternativer Grundkörper 2' dargestellt, bei dem die Rippen 19' in Einbringrichtung E keilförmig abgeschrägt sind, wodurch eine begrenzte Bewegung des Hüllkörpers 18 auf der Hülse 6 möglich ist. Durch die keilförmige Abschrägung führt eine Bewegung des Hüllkörpers 18 entgegen der Einbringrichtung E zu einer zusätzlichen Aufweitung des Hüllkörpers 18, was die Haltekraft des Spreizdübels 1 in einem Bohrloch verbessert.

An dem Hüllkörper 18 sind zwei Hüllelemente 21 als Flügelelemente 22 angeordnet, die sich vom Hüllkörper 18 ausgehend entgegen der Einbringrichtung E und im Wesentlichen in Längsrichtung L kragarmförmig in den Spreizbereich 5 erstrecken (siehe Figuren 1, 3 und 4). Die beiden Flügelelemente 22 sind auf radial entgegengesetzten Seiten des Spreizbereichs 5 des Spreizdübels 1 angeordnet und außer über den Hüllkörper 18 nicht miteinander verbunden. Die Verbindung mit dem Hüllkörper 18 ist einstückig, steif und biegefest. Die beiden Flügelelemente 22 liegen in Öffnungen 24, die durch nutartige, quaderförmige Ausnehmungen 23, den ersten Schlitz 13 und den inneren Teilen 17a der Schwächungen 17 im Spreizbereich 5 gebildet sind. Die Ausnehmungen 23 verlaufen außen in Längsrichtung des Spreizdübels 1 und sind im Verhältnis zur Größe der Spreizzungen 11, 12 relativ klein und schwächen die Spreizzungen 11, 12 nur unwesentlich. Die beiden Flügelelemente 22 sind somit auch zwischen den zwei Spreizzungen 11, 12 angeordnet und erstrecken sich über die gesamte Länge des Spreizbereichs 5. Die aus dem zweiten Kunststoff hergestellten Flügelelemente 22 füllen den ersten Schlitz 13 von einer Mantelfläche 25 des Spreizdübels 1 bis zum Schraubkanal 16 sowie die Öffnungen 24 und die inneren Teile 17a der Schwächung 17 vollständig aus. Der innenliegende zweite Schlitz 14 ist allerdings nicht mit dem zweiten Kunststoff der Hülle 3 gefüllt. Damit das Einführen eines Spreizelements in den Spreizbereich 5 durch die Flügelelemente 22 nicht behindert wird, sind die Flügelelemente 22 an ihren hinteren, der Einführhülse 4 zugewandten Enden 29 innen gegenüber der Längsachse L des Spreizdübels 1 abgeschrägt. Die Flügelelemente 22 sind kragarmförmig ausgebildet, derart, dass sie bereits bei geringen Spreizkräften aufspreizen, insbesondere schon dann, wenn das Spreizelement nur gegen die hinteren Enden 29 der Flügelelemente 22 drückt. Die Ausbildung der Flügelelemente 22 als Kragarme hat den Vorteil, dass die Spreizkräfte mit einem großen Hebelarm zur Verbindungstelle mit dem Hüllkörper 18 an den hinteren Enden 29 der Flügelelemente 22 wirken, so dass schon eine kleine Spreizkraft ausreicht, um die hinteren Enden 29 der Flügelelemente 22 trotz der biegesteifen Verbindung mit dem Hüllkörper 18 radial nach außen zu drücken. Im unverspreizten Zustand des Spreizdübels 1, also vor dem Einführen eines Spreizelements in den Spreizkanal 15, stehen die Flügelelemente 22 in radialer Richtung über den Grundkörper 2 im Spreizbereich 5 über. Im Schnitt der Figur 3 wird dies deutlich: Der Spreizbereich 5 weist über seine Länge einen konstanten Außendurchmesser D_{S} auf, während sich die beiden Flügelelemente 23 im hinteren Bereich entgegen der Einbringrichtung E keilförmig erweitern, so dass sie im Bereich ihres hinteren Endes 29 einen größeren Durchmesser D_{F} als der Spreizbereich 5 aufweisen. Die Flügelelemente 23 wirken gemeinsam mit den hinteren Verdrehsicherungsrippen 26 und zwei außen auf den Spreizzungen 11, 12 ausgebildeten, sich über die Länge des Spreizbereichs 5 erstreckenden und teilweise unterbrochenen vorderen Verdrehsicherungsrippen 27 gegen ein Mitdrehen des Spreizdübels 1 in einem Bohrloch beim Eindrehen eines Spreizelements in den Spreizkanal 15.

Durch das Verfüllen der Öffnungen 24 im Spreizbereich 5 und von Bereichen zwischen den Hülsenteilen 8, 9 der Hülse 6 mit dem zweiten Kunststoff kann beim Verspreizen des Spreizdübels 1 in einem den Spreizdübel 1 umgebenden Bohrloch relativ viel Material gegen die Wand des Bohrlochs gepresst werden, wobei die Teile des Spreizdübels 1 durch die Verwendung unterschiedlicher Kunststoffe gegeneinander beweglich und zum Aufspreizen leicht verformbar bleiben. Dadurch kann der Spreizdübel 1 sehr kompakt und kurz gestaltet werden, mit einem Verhältnis der Länge L vom vorderen Ende der Hülse 6 bis zum hinteren Ende des Spreizbereichs 5 zum Durchmesser D_{S} des Spreizbereichs 5 von ungefähr 5.

### Bezugszeichenliste

### Sprelzdübel

- 1: Spreizdübel
- 2,2': Grundkörper
- 3: Hülle
- 4: Einführhülse
- 5: Spreizbereich
- 6: Hülse
- 7: Bund
- 8: erstes Hülsenteil
- 9: zweites Hülsenteil
- 10: Verbinder
- 11: erste Spreizzunge
- 12: zweite Spreizzunge
- 13: erster Schlitz
- 14: zweiter Schlitz
- 15: Spreizkanal
- 16: Schraubkanal
- 17: Schwächung
- 17a: innerer Teil der Schwächung 17
- 17b: äußerer Teil der Schwächung 17
- 18: Hüllkörper
- 19,: 19' Rippe
- 20: Block
- 21: Hüllelement
- 22: Flügelelement
- 23: Ausnehmung
- 24: Öffnung
- 25: Mantelfläche des Spreizbereichs 5
- 26: hintere Verdrehsicherungsrippe
- 27: vordere Verdrehsicherungsrippe
- 28a: Scharnier einer Spreizzunge 11, 12
- 28b: Scharnier eines Hülsenteils 8, 9
- 29: hinteres Ende eines Flügelelements 22
- D_{F}: Außendurchmesser der Flügelelemente 22
- D_{S}: Außendurchmesser des Spreizbereichs 5
- E: Einbringrichtung
- L: Längsachse
- r₁: erste radiale Richtung
- r₂: zweite radiale Richtung
- s₁: erste Spreizrichtung
- s₂: zweite Spreizrichtung

## Patentansprüche

1. Spreizdübel (1), der aus mindestens zwei unterschiedlichen Kunststoffen besteht, mit einem Grundkörper (2, 2') aus dem ersten Kunststoff, der einen sich entlang einer Längsachse (L) erstreckenden Spreizbereich (5) mit mindestens zwei durch einen ersten Schlitz (13) voneinander getrennten Spreizzungen (11, 12) und eine in Einbringrichtung (E) vor dem Spreizbereich (5) angeordnete und in radialer Richtung aufweitbare Hülse (6) aufweist, wobei die Hülse (6) aus zwei Hülsenteilen (8, 9) besteht, die durch mindestens einen elastischen Verbinder (10) miteinander verbunden sind, und wobei die Hülse (6) durch einen Hüllkörper (18) aus dem zweiten Kunststoff zumindest teilweise umhüllt ist,
**dadurch gekennzeichnet,**
**dass** an mindestens einem der Hülsenteile (8, 9) mindestens eine sich in Umfangsrichtung erstreckende und radial nach außen stehende Rippe (19, 19') angeordnet ist, die vom Hüllkörper (18) umgeben ist.

2. Spreizdübel nach Anspruch 1, **dadurch gekennzeichnet, dass** an dem mindestens einen Hülsenteil (8, 9) mindestens drei in Richtung der Längsachse (L) voneinander beabstandete Rippen (19) angeordnet sind.

3. Spreizdübel nach Anspruch 2, **dadurch gekennzeichnet, dass** die axiale Erstreckung jeweils einer der Rippen (19) im Wesentlichen dem axialen Abstand von zwei benachbarten Rippen (19) entspricht.

4. Spreizdübel nach einem der Ansprüche 1 bis 3, **dadurch gekennzeichnet, dass** beide Hülsenteile (8, 9) mindestens eine Rippe (19, 19') aufweisen.

5. Spreizdübel nach einem der Ansprüche 1 bis 4, **dadurch gekennzeichnet, dass** mindestens eine Rippe (19') abgeschrägt ist.

6. Spreizdübel nach einem der Ansprüche 1 bis 5, **dadurch gekennzeichnet, dass** mindestens eine Rippe (19) den Hüllkörper (18) axialfest an der Hülse (6) hält.

7. Spreizdübel nach einem der Ansprüche 1 bis 6, **dadurch gekennzeichnet, dass** in der Hülse (6) ein zweiter Schlitz (14) angeordnet ist, der gegenüber dem ersten Schlitz (13) geneigt ist.

8. Spreizdübel nach einem der Ansprüche 1 bis 7, **dadurch gekennzeichnet, dass** der Spreizbereich (5) beim Einbringen eines Spreizelements im Wesentlichen in eine erste radiale Spreizrichtung (s₁) aufspreizt, während die Hülse (6) im Wesentlichen in eine davon abweichende zweite radiale Spreizrichtung (s₂) aufspreizt.

9. Spreizdübel nach Anspruch 8, **dadurch gekennzeichnet, dass** die beiden radialen Spreizrichtungen (s₁, s₂) im Wesentlichen orthogonal zueinander sind.

## Claims

1. Expansible fixing plug (1) which consists of at least two different plastics materials, having a main body (2, 2') made of the first plastics material, which main body has an expansion region (5) extending along a longitudinal axis (L) and having at least two expansion tongues (11, 12) which are separated from one another by a first slot (13), and a sleeve (6) which is arranged to the front of the expansion region (5) in the direction of introduction (E) and is widenable in a radial direction, the sleeve (6) consisting of two sleeve parts (8, 9) which are connected to one another by at least one resilient connector (10), and the sleeve (6) being at least partly encased by a casing body (18) made of the second plastics material,
**characterised in that**
on at least one of the sleeve parts (8, 9) there is arranged at least one radially outwardly projecting rib (19, 19') extending in a circumferential direction, which rib is surrounded by the casing body (18).

2. Expansible fixing plug according to claim 1, **characterised in that** on the at least one sleeve part (8, 9) there are arranged at least three ribs (19) which are spaced apart from one another in the direction of the longitudinal axis (L).

3. Expansible fixing plug according to claim 2, **characterised in that** the axial extent of one of the ribs (19) in each case substantially corresponds to the axial distance between two adjacent ribs (19).

4. Expansible fixing plug according to any one of claims 1 to 3, **characterised in that** both sleeve parts (8, 9) have at least one rib (19, 19').

5. Expansible fixing plug according to any one of claims 1 to 4, **characterised in that** at least one rib (19') is sloped.

6. Expansible fixing plug according to any one of claims 1 to 5, **characterised in that** at least one rib (19) holds the casing body (18) in axially fixed position on the sleeve (6).

7. Expansible fixing plug according to any one of claims 1 to 6, **characterised in that** in the sleeve (6) there is arranged a second slot (14) which is inclined with respect to the first slot (13).

8. Expansible fixing plug according to any one of claims 1 to 7, **characterised in that,** on introduction of an expander element, the expansion region (5) expands substantially in a first radial expansion direction (s₁), while the sleeve (6) expands substantially in a second radial expansion direction (s₂) different therefrom.

9. Expansible fixing plug according to claim 8, **characterised in that** the two radial expansion directions (s₁, s₂) are substantially orthogonal with respect to one another.

## Revendications

1. Cheville à expansion (1), qui est constituée d'aux moins deux matières plastiques différentes, avec un corps de base (2, 2') constitué de la première matière plastique, qui présente une région d'expansion (5) s'étendant le long d'un axe longitudinal (L) et dotée d'au moins deux languettes d'expansion (11, 12) séparées l'une de l'autre par une première fente (13), et une douille (6) disposée en avant de la région d'expansion (5) dans le sens d'introduction (E) et pouvant être élargie en direction radiale, sachant que la douille (6) est constituée de deux parties de douille (8, 9) qui sont reliées entre elles par au moins un élément de liaison élastique (10), et sachant que la douille (6) est enrobée au moins partiellement par un corps d'enrobage (18) constitué de la deuxième matière plastique,
**caractérisée en ce qu'**au moins une nervure (19, 19') s'étendant en direction périphérique et faisant saillie radialement vers l'extérieur est disposée sur au moins une des parties de douille (8, 9), nervure qui est entourée par le corps d'enrobage (18).

2. Cheville à expansion selon la revendication 1, **caractérisée en ce qu'**au moins trois nervures (19) distantes les unes des autres dans la direction de l'axe longitudinal (L) sont disposées sur la partie de douille au moins unique (8, 9).

3. Cheville à expansion selon la revendication 2, **caractérisée en ce que** l'étendue axiale de chacune des nervures (19) correspond essentiellement à la distance axiale entre deux nervures voisines (19).

4. Cheville à expansion selon l'une des revendications 1 à 3, **caractérisée en ce que** les deux parties de douille (8, 9) présentent au moins une nervure (19, 19').

5. Cheville à expansion selon l'une des revendications 1 à 4, **caractérisée en ce qu'**au moins une nervure (19') est biseautée.

6. Cheville à expansion selon l'une des revendications 1 à 5, **caractérisée en ce qu'**au moins une nervure (19) maintient le corps d'enrobage (18) en fixité axiale sur la douille (6).

7. Cheville à expansion selon l'une des revendications 1 à 6, **caractérisée en ce qu'**une deuxième fente (14), qui est inclinée par rapport à la première fente (13), est disposée dans la douille (6).

8. Cheville à expansion selon l'une des revendications 1 à 7, **caractérisée en ce que**, lors de l'introduction d'un élément d'expansion, la région d'expansion (5) s'ouvre par expansion essentiellement dans une première direction d'expansion radiale (s₁), tandis que la douille (6) s'ouvre par expansion essentiellement dans une deuxième direction d'expansion radiale (s₂) différente de la première.

9. Cheville à expansion selon la revendication 8, **caractérisée en ce que** les deux directions d'expansion radiales (s₁, s₂) sont essentiellement mutuellement orthogonales.
